(19) Europäisches Patentamt

European Patent Office

Office européen des brevets

(11) **EP 0 520 217 B1**

(12) **EUROPEAN PATENT SPECIFICATION**

(45) Date of publication and mention
of the grant of the patent:
**17.04.1996 Bulletin 1996/16**

(51) Int. Cl.$^6$: **B01D 53/94**, B01J 23/00,
B01J 23/22, B01J 37/34

(21) Application number: **92109335.7**

(22) Date of filing: **03.06.1992**

(54) **A catalyst for reducing nitrogen oxides in combustion gases and a method for its production**

Katalysator zur Verringerung des Stickoxidgehalts von Verbrennungsabgasen und Verfahren zu seiner Herstellung

Catalyseur pour la réduction des oxydes d'azote contenus dans les gaz de combustion et procédé pour sa préparation

(84) Designated Contracting States:
**DE ES FR GB NL SE**

(30) Priority: **24.06.1991 IT MI911730**

(43) Date of publication of application:
**30.12.1992 Bulletin 1992/53**

(73) Proprietor: **ENTE NAZIONALE PER L'ENERGIA ELETTRICA -**
**(ENEL)**
**I-00198 Roma (IT)**

(72) Inventors:
• **Ciambelli, Paolo,**
**Ferraiolo s.r.l.**
**I-20124 Milano (IT)**
• **Curcio, Franco,**
**Ferraiolo s.r.l.**
**I-20124 Milano (IT)**
• **De Michele, Gennaro,**
**Ferraiolo s.r.l.**
**I-20124 Milano (IT)**
• **Ghetti, Paolo,**
**Ferraiolo s.r.l.**
**I-20124 Milano (IT)**
• **Lisi, Luciana,**
**Ferraiolo s.r.l.**
**I-20124 Milano (IT)**
• **Musci, Mirella,**
**Ferraiolo s.r.l.**
**I-20124 Milano (IT)**
• **Notaro, Maurizio,**
**Ferraiolo s.r.l.**
**I-20124 Milano (IT)**
• **Turco, Maria,**
**Ferraiolo s.r.l.**
**I-20124 Milano (IT)**

(74) Representative: **Ferraiolo, Ruggero et al**
**FERRAIOLO S.r.l.,**
**Via Napo Torriani, 10**
**I-20124 Milano (IT)**

(56) References cited:
EP-A- 0 211 443          EP-A- 0 314 392
EP-A- 0 403 879          EP-A- 0 417 538
DE-A- 2 458 888

Remarks:
The file contains technical information submitted after the application was filed and not included in this specification

## Description

The present invention concerns a catalyst for reducing nitrogen oxides in combustion gases and a method for its production; in particular, it concerns a catalyst for the selective reduction of nitrogen oxides with ammonia and the method for its production.

The technical field relative to the present invention is that of testing nitrogen oxide emissions in the discharge gases of thermo-electric stations, incinerators, and nitric acid production plants, testing carried out by the process of selective catalytic reduction by ammonia. In this field good catalysts are known containing metallic oxides, especially of vanadium supported on a base of titanium dioxide.

Generally the conventional catalysts are constituted by a base of titanium oxide (Anatase) on which a single coating of vanadium oxide is deposited by impregnation. In the EP-A-0 417 538 (corresponding to italian patent application No.21673 A/89) the same applicant claims a vanadium oxide catalyst on a base of single monodispersed titanium oxide crystals, that is all having substantially the same dimension, ultrafine and non aggregate and in addition a method for producing the said catalyst by laser is claimed; once produced, the titanium oxide crystals are impregnated with high concentrations of vanadium oxide without giving rise to $V_2O_5$ precipitates.

The principal drawback of all impregnated catalysts is that their low thermal stability involves the reduction of the specific surface following their prolonged use and of the segregation of $V_2O_5$ crystals. This segregation reduces the selectivity of the SCR reaction and contributes to the oxidation of $SO_2$ to $SO_3$ , creating, therefore, problems of corrosion in the cooler parts of the boiler or of the turbine and stoppage problems in the catalytic reaction vessel and in the heat exchanger due to the formation of $(NH_4)HSO_4$ and $(NH4)_2S_2O_7$.

The invented catalyst obviates the cited drawbacks; it, as claimed, comprises crystals of titanium oxide and vanadium oxide together ($Ti_{1-x}V_xO_2$) in which the vanadium is intimately bound to the titanium in the crystalline lattice (in the following of this description the said oxide of titanium and vanadium will be called "mixed oxide"). The crystals have an anatase crystalline structure, are monodispersed, have an average diameter between 50Å (500 nm) and 200Å (2000 nm) inclusive, according to the conditions of the process, surface area of between 240 m²/g and 90 m²/g inclusive, and do not show internal porosity.

As disclosed in said patent application, the production method comprises the laser ray pyrolysis of vapors of suitable compounds of titanium followed by impregnation with a suitable vanadium salt. In the present case the method comprises the pyrolysis of a jet of mixed vapors of a metallo-organic and or inorganic compound of titanium and a metallorganic and or inorganic compound of vanadium by means of a laser ray; the powders obtained are calcined at the appropriate temperature. The quantity of the titanium and vanadium in the powder obtained by pyrolysis may be varied by varying the temperature of one of the said compounds with respect to the temperature of the other compound (the quantity of the compound which has the higher temperature increases), or else one controls the rate of flux of the gas carrier for both the said compounds .

The percentage by weight of the vanadium with respect to the total weight is between 0.1% and 30% inclusive, preferably between 5% and 20%.

More particularly, the production method comprises the phases of: a) irradiation of a jet of metallo-organic and/or inorganic compounds of titanium and of metallo-organic and/or inorganic compounds of vanadium in appropriate proportions by a continuous emission laser beam; b1) generation of a flux of inert gas, preferably of argon, to keep the said jet of the said compounds guided in order that the said compounds absorb the laser radiation in resonance in the region of intersection between the laser ray and the said jet; b2) if the said compounds do not absorb the laser radiation in resonance, alternatively, mixing the said compounds with a gas, such as ethylene or sulphur hexafluoride, which presents an absorption band in the spectral region between 940 and 1,000 cm$^{-1}$, in this way the said gas absorbs the laser radiation and acts as a sensitizer for the transfer of energy to the compounds of titanium and vanadium. In the said region high temperatures (500-1,500°C) are reached and the chemical reaction takes place which leads to the formation of particles of mixed oxides of titanium and vanadium, monocrystalline, anatase and of dimensions variable from a few tens of to a few hundred Ångstrom (1Å = 10 nm). The dimensions of the particles can be varied by varying the stay time, that is the time for which the said compounds remain under the action of the beam laser (the greater the stay time the greater the dimensions of the particles), the power of the laser beam and the efficiency of the sensitizer gas. The stay time (between 1 and 40 ms) is itself controllable on the basis of the magnitude of the flux of the said compounds, of the gas carrier (for example, from 100 to 1,000 sccm) and of the sensitizer gas ( for example, from 200-1,000 sccm for $C_2H_4$ and from 10-100 for $SF_6$ ), of argon (for example, from 1,000-10,000 sccm) on the basis of the diameter of the laser beam section (5-20mm) and the reagent emission nozzle section ( from 3x10$^{-2}$ to 3cm²). The power of the laser beam will be proportional to the flux of the said compounds; for example, for the production of a few kilograms of industrial grade catalyst, the power of the laser will be of a few kilowatts.

(Note: sccm= standard cubic centimeter per minute).

The powders thus obtained are calcined at an appropriate temperature.

The invented catalysts are used in substantially the same way as described in the above mentioned patent application with the direction that the combustion gases are supplied to the catalyst at temperatures of between 150 and 450°C, preferably of between 200 and 400°C.

The principle advantages of the invented catalyst are: the high specific surface given by the absence of impregnation and, consequently, the high catalytic activity which allows a strong removal of NO from the combustion gases; the rapidity of the production process, because there is not the phase of impregnation necessary in other known methods.

To illustrate in detail the invention reported here, the following specific examples, concerning either the production method or the performance of the catalyst are given.

To carry out the catalysis function tests, the following experimental conditions were adopted: A gas containing either 2.7% or 0.3% of $O_2$, 700 ppm of NO and 700 ppm of $NH_3$ ( ppm= parts per million expressed by volume) is fed onto a bed of a catalyst at a space velocity of $1.1 \times 10^6$/h at a given temperature. The concentration of NO at the entrance and the exit of the reaction vessel is measured so as to estimate the magnitude of removal expressed as follows:

$$100 \times [(NO) \text{ in} - (NO) \text{ out}] / (NO) \text{in}$$

Further the data set out in the above mentioned patent application are reported for comparison which show that the catalytic activity of the powder of mixed oxide $Ti_xV_{1-x}O_2$ is comparable to and even superior to that of the catalysts obtained by impregnation.

EXAMPLES 1 - 2 - 3 - 4 - 5 - 6

Production of a series of catalysts with varying proportions of vanadium, with characteristics reported as follows:

TABLE 1

| Example | %V | $S(m^2/g)$ | $T(°C)$ |
|---------|------|------|-----|
| 1 | 0.4 | 112 | 198 |
| 2 | 1.2 | 143 | 196 |
| 3 | 6.5 | 90 | 194 |
| 4 | 10.5 | 95 | 192 |
| 5 | 11.5 | 121 | 190 |
| 6 | 15.8 | 111 | 180 |
| (%V is the percentage by weight of vanadium with respect to the total weight). | | | |

A flux of ethylene (200sccm) drags titanium isopropoxy vapour from a container into the reaction chamber at controlled temperature in which the temperature of the liquid is maintained at the different values reported in table 1; simultaneously, a flux of ethylene (200 sccm) drags vanadyl isopropoxy vapour from another container into the reaction chamber at controlled temperature in which the temperature of the liquid is maintained at the constant value of 120°C. The jet of mixed titanium isopropoxy and vanadyl isopropoxy vapours, spatially confined by a flux of argon (2,000 sccm) is perpendicularly irradiated by the beam of a continuously emitting $CO_2$ laser, of circular section (8mm) and incident power 550W; the pressure in the isopropoxy containers and in the reaction chamber is 250 torr (33 kPa). The powder is calcined in air at T=400°C for three hours.

**EP 0 520 217 B1**

Examples 7- 8- 9- 10- 11

Production of a series of catalysts of various proportions of vanadium, with characteristics reported in the following table 2:

TABLE 2

| EXAMPLES | % V | S ($m^2/g$) | $T_V$ (°C) |
|---|---|---|---|
| 7 | 7.6 | 134 | 75 |
| 8 | 9.9 | 123 | 80 |
| 9 | 12.2 | 172 | 85 |
| 10 | 14.3 | 136 | 88 |
| 11 | 15.2 | 177 | 90 |

A flux of argon (300 sccm) drags titanium isopropoxy vapour into the reaction chamber from a container at controlled temperature in which the temperature of the liquid is maintained at a constant of 160°C; simultaneously, a flux of argon (300 sccm) drags vanadyl isopropoxy vapour into the reaction chamber from another container at controlled temperature in which the temperature of the liquid is maintained at the various values reported in Table 2. Such mixture is added before entering the reaction chamber, to a controlled flux of sulphur hexafluoride (15 sccm). The jet of such composition is treated as was indicated for the jet of mixed vapours at the end of the examples reported above. In this case, also, the powder is calcined in air at T=400°C for three hours.

RESULTS

In Tables 3 and 4 the data for the conversion of NO at different temperatures for catalysts prepared according to examples 3-5-6, with the following experimental conditions are reported:

| | |
|---|---|
| contact time | 0.005 sec |
| total flow | 80 l/h |
| concentration of NO | 700 ppm |
| concentration of $NH_3$ | 700 ppm |
| concentration of $O_2$ | 0.3 and 2.7 % |

4

## Table 3 ($O_2$ = 2.7%)

| T($^{\circ}$C) | 250$^{\circ}$C %NO | yield $N_2O$ | 300$^{\circ}$C % NO | yield $NO_2$ | 350$^{\circ}$C % NO | yield $N_2O$ |
|---|---|---|---|---|---|---|
| 3 | 24.7 | 0 | 57.2 | 0 | 76.6 | 2 |
| 5 | 46.9 | 0 | 80.3· | 0 | 88.6 | 2 |
| 6 | 54.3 | 0 | 77.6 | 2 | 84.3 | 4 |

## Table 4 ($O_2 \approx 0.3$%)

| T($^{\circ}$C) | 250oC % NO | yield $N_2O$ | 300$^{\circ}$C % NO | yield $N_2O$ | 350$^{\circ}$C % NO | yield $N_2O$ |
|---|---|---|---|---|---|---|
| 3 | 14.3 | 0 | 37.6 | 0 | 59.6 | 2 |
| 5 | 26.0 | 0 | 63.9 | 0 | 80.4 | 4 |
| 6 | 40.9 | 0 | 64.1 | 2 | 73.7 | 6 |

### Reference Examples

By way of reference we use the examples set out in the above mentioned patent application which shows how catalysts based on mixed oxide $Ti_xV_{1-x}O_2$ have a catalytic efficiency comparable or superior to those catalysts obtained by the impregnation of ultra fine powder $TiO_2$.

Table 5 reports the NO conversion of catalysts obtained by impregnation of $TiO_2$ powders produced by laser pyrolysis, with 10 % wt $V_2O_5$.

Table 5

| T (°C) | % by weight of $V_2O_5$ | Conversion of NO (%) |
|---|---|---|
| 250 | 10 | 50 |
| 300 | 10 | 83 |
| 350 | 10 | 66 |

## Claims

1. A catalyst for reducing nitrogen oxides in combustion gases comprising compounds of titanium and vanadium characterised in that the said compounds are particles of titanium and vanadium mixed oxides in the form of single monodispersed crystals having anatase crystalline structure, substantially all having the same ultra fine linear dimension of between 50Å (500 nm) and 200Å (2000 nm) and lacking internal porosity.

2. A catalyst according to claim 1 characterised in that the said particles of titanium and vanadium mixed oxides have a surface area of at least 90m2/g.

3. A catalyst according to Claims 1 and 2 above characterised in that the vanadium is contained in the crystals as a percentage by weight with respect to the total weight of between 1% and 30%.

4. A method for producing the catalyst defined in the claims above in which particles of titanium and vanadium mixed oxide powders are obtained by irradiating simultaneously a jet of inert gas containing vapors of metallo-organic and/or inorganic compounds of titanium and metallo-organic and/or inorganic compounds of vanadium and a sensitizer gas with an adsorption band in the spectral zone of between 940 and 1,000 cm$^{-1}$ with a continuous emission $CO_2$ laser beam.

5. A method according to Claim 4 characterised in that the period of time for which the said compounds are under the action of the laser beam is controlled varying one or more together: the flux of said titanium and vanadium compounds: the flux of the said gas sensitizer; the flux of the said inert gas: the cross section of the laser beam.

6. A method according to Claims 4 and 5 characterised in that the dimensions of the said particles can be varied by varying the nature of the said sensitizer gas.

7. A method according to claims 4 to 6 characterised in that the relationship between titanium and vanadium in the mixed oxide is varied by varying the temperature of one of the liquid sources of said vapour compounds with respect to the other.

**Patentansprüche**

1. Katalysator zum Reduzieren von Stickstoffoxiden in Verbrennunggasen, der Titan- und Vanadiumverbindungen enthält,
dadurch **gekennzeichnet,** daß die Verbindungen Teilchen von Titan- und Vanadium-Mischoxiden in Form von monodispersen Einkristallen mit Anatas-Kristallstruktur sind, die im wesentlichen alle diesselben ultrafeinen linearen Abmessungen von 50 Å (500 nm) und 200 Å (2000 nm) haben und frei von innerer Porosität sind.

2. Katalysator nach Anspruch 1,
dadurch **gekennzeichnet,** daß die Teilchen von Titan- und Vanadium-Mischoxiden eine spezifische Oberfläche von mindestens 90 m$^2$/g haben.

3. Katalysator nach Anspruch 1 und 2,
dadurch **gekennzeichnet,** daß das Vanadium in den Kristallen mit einem Prozentsatz zwischen 1% und 30% bezogen auf das Gesamtgewicht enthalten ist.

4. Verfahren zur Herstellung des Katalysators nach den vorstehenden Ansprüchen,
bei dem Teilchen von Titan- und Vanadium-Mischoxidpulver erhalten werden durch gleichzeitiges Bestrahlen eines Stromes von Inertgas, welches Dämpfe von metallorganischen und/oder anorganischen Titanverbindungen und metallorganischen und/oder anorganischen Vanadiumverbindungen sowie ein Sensibilisatorgas mit einem Absorptionsband im Spektralbereich zwischen 940 und 1000 cm$^{-1}$ enthält, mit einem $CO_2$-Dauerstrich-Laserstrahl.

5. Verfahren nach Anspruch 4,
dadurch **gekennzeichnet,** daß die Zeitdauer, in der die Verbindungen der Wirkung des Laserstrahls ausgesetzt sind, durch Verändern einer oder mehrerer der folgenden Größen gesteuert wird: die Strömungsmenge der Titan- und Vanadiumverbindungen; die Strömungsmenge des Sensibilisatorgases; die Strömungsmenge des Inertgases; der Querschnitt des Laserstrahls.

6. Verfahren nach Anspruch 4 und 5,
dadurch **gekennzeichnet,** daß die Abmessungen der Teilchen durch Verändern der Beschaffenheit des Sensibilisatorgases verändert werden können.

7. Verfahren nach den Ansprüchen 4 bis 6,
dadurch **gekennzeichnet,** daß das Verhältnis zwischen Titan und Vanadium in den Mischoxid geändert wird durch Verändern der Temperatur einer der Flüssigkeitsquellen der dampfförmigen Verbindung relativ zur anderen.

**Revendications**

1. Catalyseur pour la réduction des oxydes d'azote dans les gaz de combustion qui comprend des composés du titane et du vanadium, caractérisé en ce que ces composés sont des particules d'oxydes mixtes de titane et de vanadium, sous la forme de cristaux monodispersés uniques ayant une structure cristalline du type Anatase, essentiellement tous ayant la même dimension linéaire ultra fine, d'entre 50 Å (500 nm) et 200 Å (2000 nm) et manquant de porosité interne.

2. Catalyseur selon la revendication 1, caractérisé en ce que lesdites particules d'oxydes mixtes de titane et de vanadium ont une zone de surface d'au moins 90 $m^2$/g.

3. Catalyseur selon la revendication 1 et la revendication 2 ci-dessus, caractérisé en ce que le vanadium est contenu dans les cristaux en tant que pourcentage en poids par rapport au poids total d'entre 1 % et 30 %.

4. Procédé de fabrication du catalyseur défini dans les revendications ci-dessus, caractérisé en ce que les particules d'oxydes mixtes de titane et de vanadium en poudre sont obtenues en irradiant simultanément un jet de gaz inerte contenant des vapeurs de composés métallo-organiques et/ou minéraux du titane et des composés métallo-organiques et/ou minéraux du vanadium et un gaz sensibilisateur ayant une bande d'adsorption dans la zone de spectre comprise entre 940 et 1000 $cm^{-1}$, avec une émission continue de faisceau laser au $CO_2$.

5. Procédé selon la revendication 4, caractérisé en ce que la période de temps pendant laquelle lesdits composés sont sous l'action du faisceau laser, est contrôlée en variant un ou plusieurs facteurs ensemble : le flux de composés du titane et du vanadium ; le flux du gaz sensibilisateur ; le flux du gaz inerte ; la section transversale du faisceau laser.

6. Procédé selon les revendications 4 et 5, caractérisé en ce que les dimensions des particules peuvent être variées en variant la nature du gaz sensibilisateur.

7. Procédé selon les revendications 4 à 6, caractérisé en ce que la relation entre le titane et le vanadium dans l'oxyde mixte varie en variant la température d'une des sources liquides des composés de vapeur en tenant compte de l'autre source.